# FASCICULE DE BREVET EUROPEEN

(11) **EP 1 128 728 B1**
(45) Date de publication et mention de la délivrance du brevet: **03.12.2003**
(21) Numéro de dépôt: 99925072.3
(22) Date de dépôt: 14.06.1999
(51) Int. Cl.: A01N 37/46, A01N 59/20, A01N 59/16

(54) **COMPOSITIONS DESTINEES A LA PROTECTION DES VEGETAUX CONTRE LE STRESS OXYDATIF**
ZUSAMMENSETZUNGEN FÜR DEN SCHUTZ VON PFLANZEN GEGEN OXIDATIVEN STRESS
COMPOSITIONS FOR PROTECTING PLANTS AGAINST OXIDATIVE STRESS

(30) Priorité: 17.06.1998 FR 9807613
(43) Date de publication de la demande: 05.09.2001
(73) Titulaire: De Mil, Christophe, 75014 Paris (FR)
(72) Inventeur: MORELLE, Jean, 75010 Paris (FR); LAUZANNE, Eliane, 75011 Paris (FR); ROTHFUSS, Jacqueline, 67380 Lauterbourg (FR)
(86) Numéro de dépôt international: FR9901400
(87) Numéro de publication internationale: WO99065304

(56) Documents cités:
- EP-A- 0 218 501
- EP-A- 0 312 502
- EP-A- 0 373 314
- WO-A-94/00009
- DE-A- 3 212 448
- DE-A- 3 802 216
- FR-A- 2 403 024
- FR-A- 2 747 309

## Description

Il est bien connu que de nombreuses plantes sont sensibles à la baisse de température,sans pour autant atteindre 0°C;tel est le cas de la plupart des arbres fruitiers,dont la floraison ne conduit pas à la formation de fruits.

Or,il a été constaté que l'abaissement de la température et le gel,la sécheresse et l'excés de chaleur avaient pour effet d'agresser le végétal,générant un *stress oxydatif*, c'est-à-dire une formation accelérée et précoce de radicaux libres :
alkoxy,peroxy,oxygène singulet. Ces radicaux libres sont produits par l'intervention de la lipoxygénase à partir des lipides membranaires.
Dans le cas de la sécheresse,on a observé la formation d'anions superoxydes O2° par les chloroplastes.
Ce stress oxydatif conduit à la formation de dérivés toxiques pour la cellule,tel,le malondialdéhyde (MDA),cette dernière substance exprimant le niveau de la dégradation oxydative. La lipoperoxydation est mise en évidence par la réaction de l'acide thiobarbiturique (ATB) avec le MDA.

L'accumulation de lipoperoxydes provoque une activation de la senescence des feuilles et des dicotylédons.

Il a été constaté que les feuilles sénescentes et les dicotylédons accumulaient des substances fluorescentes,issues du processus oxydatif des acides gras insaturés.Ces substances fluorescentes sont également considérées comme des ultimes produits de la peroxydation,obtenues par l'action des fonctions aldehydes,en particulier du MDA sur les fonctions amines des protéines.

Ce stress oxydatif provoque une diminution de la superoxyde dismutase (SOD),ainsi qu'une perturbation des protéines membranaires,comme on a pu l'observer par exemple pour les légumes.

L'activité dégradante de la peroxydation lipidique se manifeste non seulement au niveau des plantes,à leurs différents stades d'évolution mais également au niveau de l'activité germinative des semences,celle-ci étant en corrélation avec leur teneur en hydroperoxydes.
Dans l'état actuel de la technique,on ne connaît pas de substances pouvant inhiber les effets du stress oxydatif sur la plante et les semences.

Les travaux de Smith et al. Afr.J.Sci. 1989 85 (1) 63; de Hailstones et al. Plant Physiol. 1988 133 (4) 452, montrent que les semences ne possédant pas d'antioxydants polyphénoliques sont encore plus sensibles à l'oxydation que la plante. Dans des semences altérées, on trouve des aldehydes caractérisant la lipoperoxydation; cet état conduit à une diminution de l'activité germinative.

De nombreuses plantes sont riches en polyphénols (flavonoïdes). Ce sont des antiradicalaires puissants.Le niveau de ces polyphénols étant plus élevé chez la plante qui se trouve au soleil que chez celle qui est à l'ombre

La présente invention a pour objet de protéger les végétaux contre ce stress oxydatif par l'emploi de stuctures lipoaminoacides sélectionnées pour leur activité antioxydante.

Des structures lipoaminoacides ont été décrites comme agents de stimulation de la biosynthèse végétale,comme agents de fertilisation;également pour leurs propriétés antimicrobiennes et antifongiques,dans les brevets : FR-A-2 403 024; FR-A-2 503 153; FR-A-2 503 144.

De même le brevet francais FR-A-2 503 151, fait état de butyrylaminoacides soufrés comme ceux de la methionine ou de la cystine, sans rapport avec la protection contre la lipoperoxydation. Ce n'est qu'au cours de ces dernières années qu'il a été constaté,que la butyrylméthionine était douée de propriétés antioxydantes,alors que la butyrylcyctine ne l'était pas.

Le brevet: EP- 0 218 501 A,fait état de l'utilisation de lipoaminoacides et de leurs sels pour provoquer l'augmentation de la fécondation florale. Dans ce brevet les molécules décrites interviennent dans un mécanisme biochimique bien spécifique,conduisant à l'accroissement de la capacité de pollinisation cela,en conditions climatiques normales. La densité plus élevée de fleurs fécondables,permet d'assurer la continuité du processus de fécondation même si des conditions climatiques défavorables apparaissent. D'autre part,ce brevet mentionne que "le sucre,le sel,les phénolamines étaient impliquées dans la mise à fleur". Ces différentes substances sont dépourvues de toute action antioxydante.

Le brevet FR-A-2 503 153 ,fait état de lipoaminoacides de proline et d'hydroxyproline ayant une activité spécifique contre les effets de la sécheresse.

Des études réalisées par la suite sur des lipoaminoacides de proline ont démontré que ces stuctures avaient également une action contre les effets dommageables du gel.

Dans le cadre des expérimentations effectuées,conduisant à la présente invention,il a été observé,que des lipoaminoacides de proline n'ayant pas d'activité antioxydante permettaient une survie des plantes expérimentées,de l'ordre de 40%,lorsqu'elles étaient exposées à -7°C durant trois heures; alors qu'une structure lipoaminoacide comportant 70% de proline et 30% de methionine,permettait une survie des plantes au gel de 60% à 75%,montrant ainsi qu'un lipoaminoacide de methionine par ses propriétés antioxydantes avait une activité contre le stress oxydatif dû au gel.

Des résultats similaires ont été obtenus,d'une part par enrichissement en methionine lors de l'acylation des acides aminés issus d'hydrolysats de proteines animales ou de proteines végétales,et d'autre part,lorsque des lipoaminoacides ont leurs carboxyles neutralisés par un acide aminé basique tel que la lysine ou l'arginine.

Des expérimentations effectuées sur le stress à la sécheresse, de plants de cotonnier ont montré une augmentation de leur résistance à la deshydratation.

L'apport de lipoaminoacides antioxydants à des sels de cuivre ou de zinc de lipoaminoacides,indiqués comme exemples,conduit à un certain nombre d'observations:
- Sur la vigne on a constaté une augmentation à la résistance au Botrytis, une augmentation de la photosynthèse de 10 à 20%.
- Sur les semences,on a observé une augmentation de l'activité germinative
- On a constaté une augmentation de la production de lin, de maïs, de blé, d'orge, de tournesol.

En conséquence de ce qui vient d'être développé,la présente invention est caractérisée par l'emploi contre le stress oxydatif des végétaux,de structures lipoaminoacides ayant fait l'objet d'une sélection expérimentale et comportant:
Des chaînes grasses de 4 à 22 atomes de carbone. On utilisera préférentiellement les chaînes butyryle (C4) et octanoyle (C8). Les différentes chaînes grasses sont acylées,soit à des acides aminés pris individuellement ou en mélanges,soit à des acides aminés issus d'hydrolysats de protéines animales ou végétales, enrichis en méthionine,dans des rapports de 5 à 30% .

Les lipoaminoacides obtenus sont salifiés ou non par des oligo-éléments: préférentiellement par le cuivre ou le zinc,ou par des acides aminés basiques tels que,la lysine ou l'arginine.

L'invention s'etend à l'addition de lipoaminoacide de méthionine à tout mélange de lipoaminoacides ne comportant pas ou comportant peu de méthionine,salifiés ou non par des oligo-éléments.

L'invention s'étend également à l'emploi de lipoaminoacides pris individuellement ou en mélanges,dont les carboxyles sont neutralisés par un acide aminé basique tel que la lysine ou l'arginine,ces compositions douées de propriétés antioxydantes peuvent être utilisées seules ou avec des lipoaminoacides salifiés ou non par des oligo-éléments.

Ces différentes substances sont utilisées selon la nature des végétaux à raison de 50 à 1000g/ha.

A titre d'exemples d'utilisation des structures décrites,citons:

### 1) Pour le traitement des semences

Sel de cuivre de l'acide butyrylaminoacides comportant 5 à 30% de butyrylméthionine

Sel de cuivre de l'acide octanoylaminoacides en mélange à raison de 5 à 50% avec l'association d'un octanoylaminoacides avec la lysine ou l'arginine.

Sel de zinc de l'acide octanoylaminoacides dont 20% sous forme d'octanoylméthionine

Sel double de Zinc et de lysine de l'acide butyrylaminoacides

Octanoylglycinate de lysine

Butyrylprolinate de lysine

### 2) Pour le traitement de la vigne

Sel de cuivre de l'acide octanoylaminoacides comportant 10 à 20% d'octanoylméthionine

### Mélange:

Butyrylproline 50%
Butyrylméthionine 50%

### 3) Pour le traitement des pommes de terre

sel de cuivre de l'acide octanoylaminoacides dont 30% d'octanoylméthionine
Sel de cuivre de butyrylaminoacides comportant
5 à 20% de méthionine
Sel double de cuivre et de lysine de butyrylaminoacides
Octanoylméthionate de lysine

### 4) Pour le traitement du blé

Sel de cuivre du butyrylaminoacides comportant 20% de méthionine

Sel de cuivre d'acide octanoylaminoacides en mélange avec 30% d'association lysine-acide octanoylaminoacides

### Mélange:

Octanoylglycinate de lysine 50%
Butyrylméthionate de lysine 50%

## Revendications

1. Procédé de protection des végétaux contre le stress oxydatif **caractérisé,par** l'emploi de structures lipoaminoacides sélectionnées pour leurs propriétés antioxydantes, comportant des chaînes grasses de 4 à 22 atomes de carbone, ces chaînes grasses étant acylées soit, à des acides aminés pris individuellement ou en mélanges,soit à des acides aminés issus d'hydrolysats de protéines animales ou végétales, enrichis en méthionine dans des rapports de 5 à 30%, les lipoaminoacides obtenus étant salifiés ou non par des oligo-éléments, préférentiellement par le cuivre ou le zinc,ou par des acides aminés basiques,tels que la lysine ou l'arginine.

2. Procédé de protection des végétaux selon la revendication 1, **caractérisé par** l'emploi de chaînes grasses butyryle en (C4) et octanoyle en (C8).

3. Procédé de protection des végétaux contre le stress oxydatif, **caractérisé en ce que** l'on ajoute un lipoaminoacide de méthionine à tout mélange de lipoaminoacides ne comportant pas de methionine,salifiés ou non par des oligo-éléments.

4. Procédé de protection des végétaux contre le stress oxydatif, **caractérisé par** l'emploi de lipoaminoacides pris individuellement ou en mélanges,dont les carboxyles sont neutralisés par un acide aminé basique tel que la lysine ou l'arginine.

5. Procédé de protection des végétaux selon la revendication 4, **caractérisé en ce que** les lipoaminoacides dont les carboxyles sont neutralisés par des acides aminés basiques tels que la lysine ou l'arginine,peuvent être utilisés avec des lipoaminoacides salifiés ou non par des oligo-éléments.

## Patentansprüche

1. Verfahren zum Schutz von Pflanzen vor oxidativem Stress, bei denen Fettaminosäure-Strukturen eingesetzt werden, die aufgrund ihrer antioxidativen Eigenschaften ausgewählt werden und Fettketten mit 4 bis 22 Kohlenstoff-Atomen beinhalten. Diese Fettketten können einerseits entweder mit einzelnen oder mehreren Aminosäuren acyliert sein, andererseits auch mit Aminosäuren aus Hydrolysaten von tierischen oder pflanzlichen Proteinen, die mit 5 bis 30% Methionin angereichert wurden.
Diese Fettaminosäuren können durch Oligoelemente salifiziert sein oder nicht. Die Salifizierung erfolgt hauptsächlich mit Kupfer oder Zink, oder durch Basis-Aminosäuren wie z.B. das Lysin oder Arginin.

2. Verfahren zum Schutz von Pflanzen laut Forderung Nr. 1, die **dadurch gekennzeichnet sind, daß** Butyryl-Fettketten mit (C4) und Octanoyl-Fettketten mit (C8) verwendet werden.

3. Verfahren zum Schutz von Pflanzen vor oxidativem Stress, die **dadurch gekennzeichnet sind, daß** eine Methionin-Fettaminosäure zu einer Mischung von Fettaminosäuren hinzugefügt wird, welche bisher kein Methionin enthielt. Diese Mischung kann durch Oligoelemente salifiziert sein oder nicht.

4. Verfahren zum Schutz von Pflanzen vor oxidativem Stress, die **dadurch gekennzeichnet sind, daß** einzelne oder mehrere Fettaminosäuren verwendet werden, deren Karboxyle durch eine Basis-Aminosäure wie z.B. das Lysin oder Arginin neutralisiert werden.

5. Verfahren zum Schutz von Pflanzen laut Forderung Nr. 4, die **dadurch gekennzeichnet sind, daß** die Fettaminosäuren, deren Karboxyle durch Basis-Aminosäuren wie z.B. das Lysin oder Arginin neutralisiert werden, zusammen mit Fettaminosäuren verwendet werden können, die durch Oligoelemente salifiziert wurden oder nicht.

## Claims

1. A method to protect plants against oxidative stress, **characterized by** the use of lipo-amino acid compounds selected for their antioxydant properties, containing from 4 to 22 atoms of carbon, these fatty acid chains being acylated, either to individual or combined amino acids, or derived from hydrolysates of proteins of animal or vegetal origin, enriched in methionine by 5 to 30%, the lipo-amino acids thus obtained are salified or not by oligoelements, preferably copper or zinc, or by the basic amino acids lysine or arginine.

2. A method to protect plants as defined in Claim 1), **characterized by** the use of butyryl (C4) fatty acid chains and octanoyl (C8) fatty acid chains.

3. A method to protect plants against oxidative stress, **characterized by** the addition of a lipo-amino acid of methionine to any compound of combined lipo-amino acids that contains no or only trace elements of methionine, salified or not by oligoelements.

4. A method to protect plants against oxidative stress **characterized by** the use of lipo-amino acids, either individuals or combined, with their carboxyls neutralysed by the basic amino acids lysine or arginine.

5. A method to protect plants as defined in Claim 4), **characterized by** the use of lipo-amino acids with their carboxyls neutralysed by the basic amino acids lysine or arginine, utilized or not with lipo-amino acids salified or not by oligoelements.
